# EUROPEAN PATENT APPLICATION

(11) **EP 4 567 658 A2**
(43) Date of publication of application: **11.06.2025**
(21) Application number: 25154152.0
(22) Date of filing: 27.01.2025
(51) Int. Cl.: G06F 40/16, G06F 40/166, G06F 40/216, G06F 40/35, G06F 40/44, G06F 40/56

(54) **METHOD AND APPARATUS FOR PROCESSING TEXT, ELECTRONIC DEVICE, AND STORAGE MEDIUM**

(30) Priority: 01.03.2024 CN 202410239427
(71) Applicant: Beijing Zitiao Network Technology Co., Ltd., Beijing 100190 (CN)
(72) Inventor: ZHU, Xiaoshu, Beijing, 100028 (CN)
(74) Representative: Isarpatent

(57) **Abstract**

Provided are a method and apparatus for processing text, an electronic device, and a storage medium. The method for processing text includes: acquiring (5110) a first text to be processed; determining (S120), based on the first text and a preset instruction, a first input for a first target model, the preset instruction being for instructing the first target model to provide a modification suggestion for the first text; inputting (S130) the first input into the first target model to obtain the modification suggestion; and displaying (S140) the modification suggestion in a first graphical user interface (11). In this way, a modification suggestion can be conveniently and efficiently provided through a target model for a text content provided by a user.

## Description

### FIELD

The present disclosure relates to the field of computer technologies, and in particular, to a method and apparatus for processing text, an electronic device and a storage medium.

### BACKGROUND

A large language model (LLM) is a deep learning model trained based on a large amount of text data. It can not only generate a natural language text, but also understand the meaning of the text in depth, and handle various natural language tasks, such as text summarization, question answering, translation, and the like.

### SUMMARY

This summary is provided to introduce concepts in a simplified form that are described in detail in the following detailed description. This summary section is not intended to identify key features or essential features of the claimed technical solution, nor is it intended to be used to limit the scope of the claimed technical solution.

In a first aspect, according to one or more embodiments of the present disclosure, a method for processing text is provided. The method includes: acquiring a first text to be processed; determining, based on the first text and a preset instruction, a first input for a first target model, the preset instruction being for instructing the first target model to provide a modification suggestion for the first text; inputting the first input into the first target model to obtain the modification suggestion; and displaying the modification suggestion in a first graphical user interface.

In a second aspect, according to one or more embodiments of the present disclosure, an apparatus for processing text is provided. The apparatus includes: a text acquiring unit, configured to acquire a first text to be processed; an input determining unit, configured to determine, based on the first text and a preset instruction, a first input for a first target model, the preset instruction being for instructing the first target model to provide a modification suggestion for the first text; a suggestion acquiring unit, configured to input the first input into the first target model to obtain the modification suggestion; and a suggestion displaying unit, configured to display the modification suggestion in a first graphical user interface.

In a third aspect, according to one or more embodiments of the present disclosure, an electronic device is provided. The electronic device includes: at least one memory and at least one processor; where the memory is configured to store program code, and the processor is configured to invoke the program code stored in the memory to cause the electronic device to perform the method according to one or more embodiments of the present disclosure.

In a fourth aspect, according to one or more embodiments of the present disclosure, a non-transitory computer storage medium is provided. The non-transitory computer storage medium stores program code, and the program code, when executed by a computer device, causes the computer device to perform the method according to one or more embodiments of the present disclosure.

According to one or more embodiments of the present disclosure, by acquiring a first text to be processed, determining a first input for a first target model based on the first text and a preset instruction, inputting the first input into the first target model to generate a modification suggestion, and displaying the modification suggestion in a first graphical user interface, a modification suggestion can be conveniently and efficiently provided through a target model for a text content provided by a user.

### BRIEF DESCRIPTION OF THE DRAWINGS

The above and other features, advantages, and aspects of various embodiments of the present disclosure will become more apparent when taken in conjunction with the drawings and with reference to the following detailed description. Throughout the drawings, the same or similar reference numbers refer to the same or similar elements. It should be understood that the drawings are schematic and that the components and elements are not necessarily drawn to scale.
FIG. 1 is a flow diagram of a method for processing text according to an embodiment of the present disclosure;
FIG. 2 is a schematic diagram of a first graphical user interface according to an embodiment of the present disclosure;
FIG. 3 is a schematic diagram of a second graphical user interface according to an embodiment of the present disclosure;
FIG. 4 is a schematic diagram of an apparatus for processing text according to an embodiment of the present disclosure; and
FIG. 5 is a schematic structural diagram of an electronic device according to an embodiment of the present disclosure.

### DETAILED DESCRIPTION OF EMBODIMENTS

Embodiments of the present disclosure will be described in more detail below with reference to the drawings. Although some embodiments of the present disclosure are shown in the drawings, it should be understood that the present disclosure can be implemented in various forms and should not be construed as being limited to the embodiments set forth herein. On the contrary, these embodiments are provided for a more thorough and complete understanding of the present disclosure. It should be understood that the drawings and embodiments of the present disclosure are only for exemplary purposes and are not intended to limit the protection scope of the present disclosure.

It should be understood that the steps described in the implementations of the present disclosure can be executed in different orders and/or executed in parallel. In addition, the implementations may include additional steps and/or omit the execution of the illustrated steps. The scope of the present disclosure is not limited in this aspect.

As used herein, the term "include/comprise" and its variations are open-ended inclusions, that is, "include/comprise but not limited to". The term "based on" is "at least partially based on". The term "an embodiment" means "at least one embodiment"; the term "another embodiment" means "at least one additional embodiment"; and the term "some embodiments" means "at least some embodiments". The term "in response to" and related terms mean that a signal or event is affected by another signal or event to some extent, but not necessarily completely or directly. In a case that event x occurs "in response to" event y, then x may be in response to y directly or indirectly. For example, the occurrence of y may eventually lead to the occurrence of x, but there may be other intermediate events and/or conditions. In other cases, y may not necessarily lead to the occurrence of x, and x may occur even if y has not occurred. In addition, the term "in response to" may also mean "at least partially in response to".

The term "determine" broadly encompasses a variety of actions, which may include acquiring, calculating, computing, processing, deriving, investigating, searching (for example, searching in a table, a database, or other data structures), finding, and similar actions, and may also include receiving (for example, receiving information), accessing (for example, accessing data in a memory), and similar actions, as well as parsing, selecting, choosing, establishing, and similar actions, etc. Related definitions of other terms will be given in the following description. Related definitions of other terms will be given in the following description.

It can be understood that data (including but not limited to the data itself, the acquisition or use of the data) involved in the technical solutions of the present disclosure should follow the provisions of relevant laws and regulations.

It can be understood that before using the technical solutions disclosed in the embodiments of the present disclosure, the user should be informed of the type, scope of use, use scenarios, etc. of personal information involved in the present disclosure in an appropriate manner in accordance with relevant laws and regulations, and the authorization of the user should be obtained. For example, when an active request from a user is received, prompt information is sent to the user to explicitly prompt the user that the operation requested by the user will require the acquisition and use of the user's personal information, so that the user can independently choose whether to provide the personal information to software or hardware such as an electronic device, an application, a server, or a storage medium that performs the operations of the technical solutions of the present disclosure, according to the prompt information.

As an optional but non-limiting implementation, the method of sending the prompt information to the user in response to receiving the active request from the user may be, for example, a pop-up window method, and the prompt information may be presented in text in the pop-up window. In addition, the pop-up window may also carry a selection control for the user to choose to "agree" or "disagree" to provide the personal information to the electronic device.

It can be understood that the above process of notifying and obtaining user authorization is only illustrative and does not limit the implementations of the present disclosure, and other methods that meet relevant laws and regulations may also be applied to the implementations of the present disclosure.

It should be noted that concepts such as "first" and "second" mentioned in the present disclosure are only used to distinguish different apparatuses, modules or units, and are not used to limit the order or interdependence of functions performed by these apparatuses, modules or units.

It should be noted that the modifications of "a" and "a plurality of" mentioned in the present disclosure are illustrative and non-limiting, and those skilled in the art should understand that unless the context clearly indicates otherwise, they should be understood as "one or more".

For the purposes of the present disclosure, the phrase "A and/or B" means (A), (B) or (A and B).

The names of messages or information exchanged between apparatuses in the implementations of the present disclosure are only for illustrative purposes, and are not intended to limit the scope of these messages or information.

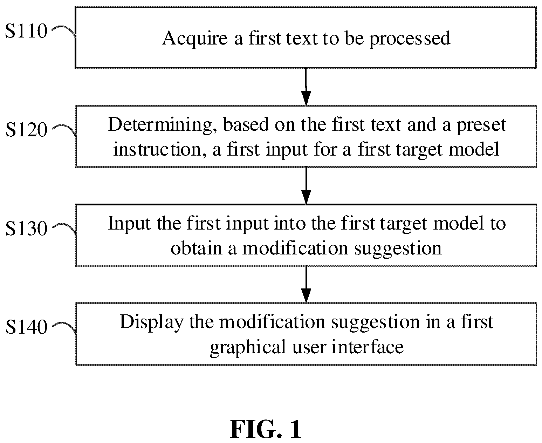

Referring to FIG. 1, FIG. 1 shows a flowchart of a method 100 for processing text according to an embodiment of the present disclosure. The method 100 includes steps S110 to S140.

At step S110, a first text to be processed is acquired.

In some embodiments, a text input by a user in a preset text input box may be acquired, or a first text content in a file (e.g., a document, a picture, etc.) uploaded by the user may be acquired, or a first text content may be acquired based on an address given by the user, for example, a first text content in a related online document and a web interface may be acquired based on a given web interface link.

At step S 120: a first input for a first target model is determined based on the first text and a preset instruction, and the preset instruction is for instructing the first target model to provide a modification suggestion for the first text.

At step S130: the first input is input into the first target model to obtain the modification suggestion.

The first target model may include a language model, such as a transformer-based model, an autoencoder-based model, a sequence-to-sequence model, a recurrent neural network model, or a hierarchical model, but the present disclosure is not limited thereto. In some embodiments, the first target model may be a large natural language processing model that can understand the meaning of the text, handle various natural language tasks, and generate natural language text. Word-type office software provided by the related art can detect and correct typo, grammar errors, and punctuation errors in a document, but cannot provide modification suggestions (for example, suggestions for content, rhetoric, and expression) for the substantive content of the text. In this regard, by using the large natural language processing model, the present embodiment can provide a substantive modification suggestion for the substantive content of the text.

In some embodiments, both the first text and the preset instruction may be directly used as inputs (that is, the first input) for the first target model, respectively, for example, the first text is input first and then the preset instruction is input, or vice versa. In some embodiments, the first text and the preset instruction may be spliced in a preset format, and the spliced content (that is, the first input) is input into the first target model.

In some embodiments, the preset instruction may be a predefined text for instructing the first target model to provide the modification suggestion for the first text. The modification suggestion may be a modification suggestion for a substantial content such as the content, expression, and rhetoric of the text. Exemplarily, the preset instruction may be "please return a sentence with an improper expression in the above/following article and a modification suggestion" and the like.

In some embodiments, after the first text uploaded by the user is acquired, an interface of the first target model may be invoked, and the first text and the preset instruction may be input into the first target model together, so that the first target model analyzes the first text and returns a corresponding modification suggestion.

At step S140: the modification suggestion is displayed in the first graphical user interface.

In some embodiments, the first graphical user interface may be displayed in response to an instruction of a user. The first graphical user interface may be displayed at a preset position for the first text in a form of a pop-up window, a column, or other forms, which is not limited in the present disclosure.

According to one or more embodiments of the present disclosure, by acquiring a first text to be processed, determining a first input for a first target model based on the first text and a preset instruction, inputting the first input into the first target model to generate a modification suggestion, and displaying the modification suggestion in a first graphical user interface, a modification suggestion can be efficiently provided through a target model for a text content provided by a user.

In some embodiments, a first text content associated with the modification suggestion may be highlighted in the first text. Exemplarily, after the first text is acquired, the first text may be displayed in a preset graphical user interface, and the first text content to which the modification suggestion returned by the first target model is directed may be highlighted. The first text content may be highlighted by adjusting a font, a font size, a font color, a background color, or by an additional symbol mark.

Preferably, in response to the first text content being a part of the first text, the first text content is highlighted; and in response to the first text content being the entire content of the first text, the first text content is not highlighted, so as to avoid affecting reading of the user due to highlighting of the entire text.

In some embodiments, the modification suggestion displayed in the first graphical user interface may be updated in response to an input of a user. In this way, for the modification suggestion displayed in the first graphical user interface, the user can modify it on this basis, and then a modified text may be generated based on the modification suggestion modified by the user.

In some embodiments, a second input for inputting into a second target model may be determined based on the modification suggestion currently displayed in the first graphical user interface and a first text content associated with the modification suggestion, and the second input may be input into the second target model to obtain a second text content.

The second text content is a modified text content obtained by the second target model by modifying the first text content based on the modification suggestion. In some embodiments, both the first text content and the modification suggestion may be used as inputs (that is, the second input) for the second target model, respectively, for example, the first text content is input first and then the modification suggestion is input, or vice versa. In some embodiments, the first text content and the modification suggestion may be spliced in a preset format, and the spliced content may be used as the second input to be input into the second target model. In some embodiments, the second input may further include other preset instructions, for example, "please modify the above sentence according to the following modification suggestion", but the present disclosure is not limited thereto.

The second target model may include a language model, such as a transformer-based model, an autoencoder-based model, a sequence-to-sequence model, a recurrent neural network model, or a hierarchical model, but the present disclosure is not limited thereto. Exemplarily, the second target model may be a large natural language processing model that can understand the meaning of the text, handle various natural language tasks, and generate natural language text.

In some embodiments, the second target model may be the same model as the first target model, that is, the same model is used to generate both the modification suggestion and the modified text. In some embodiments, the second target model is a different model from the first target model, that is, the two models have different division of labor.

In some embodiments, the second text content is updated in response to an edit operation of the user on the second text content. In this way, for the modified text output by the second target model, the user can further modify it on this basis, and then the original text may be replaced with the final version modified by the user.

In some embodiments, the first text content corresponding to the second text content may be further replaced with the second text content, in the first text. It can be understood that, in response to the user having modified the second text content, the second text content participating in the replacement of the original text is the second text content modified by the user.

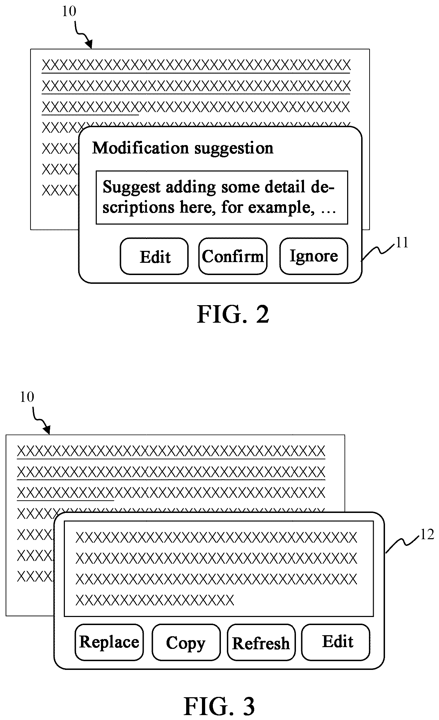

Exemplary description will be made below with reference to FIGs. 2-3. After the first text uploaded by the user is acquired, part or all of the content in the first text may be input into the first target model, and a modification instruction (that is, the preset instruction) is sent to the first target model, for example, "please return a sentence with an improper language expression in the article and a corresponding modification suggestion". Then, the sentence returned by the model is matched with the first text, and the matched sentence (that is, the first text content) is highlighted in the preset graphical user interface 10 by underlining. In response to the user triggering the first text content highlighted in the graphical user interface 10 (for example, through operations such as mouse hovering and clicking or the like), the first graphical user interface 11 is popped up, which displays the modification suggestion corresponding to the first text content returned by the first target model. The user may accept, ignore, or edit the modification suggestion.

In response to the user accepting the modification suggestion, for example, the user triggers the "confirm" button of the first graphical user interface 11, the modification suggestion and the original text part corresponding to the modification suggestion (that is, the first text content) may be input into the second target model, to obtain the second text content as the modified text, and the second text content is displayed through the second graphical user interface 12. The second graphical user interface is displayed at a preset position for the first text content.

For the second text displayed in the second graphical user interface 12, the user may copy (for example, trigger the "copy" button of the second graphical user interface 12) and edit (for example, trigger the "edit" button of the second graphical user interface 12) it. In response to the user being not satisfied with the currently displayed second text content, the user may also such as trigger the "refresh" button of the second graphical user interface 12 to regenerate new second text content. For example, the step of inputting the first text content and the modification suggestion into the second target model to obtain the second text content may be re-performed.

In response to the user accepting the modified text, for example, the user triggers the "replace" button of the second graphical user interface 12, the second text content currently displayed in the second graphical user interface 12 may be used to replace the corresponding first text content in the first text displayed in the graphical user interface 30.

In this way, in the present embodiment, a modification suggestion can be provided through a target model for an original text provided by a user, and a modified text can be generated based on the modification suggestion accepted by the user to replace the original text. In addition, by displaying an editable modification suggestion and a modified text in the first and second graphical user interfaces respectively, it is convenient for the user to directly modify the content based on the output of the model to meet his/her own expectations.

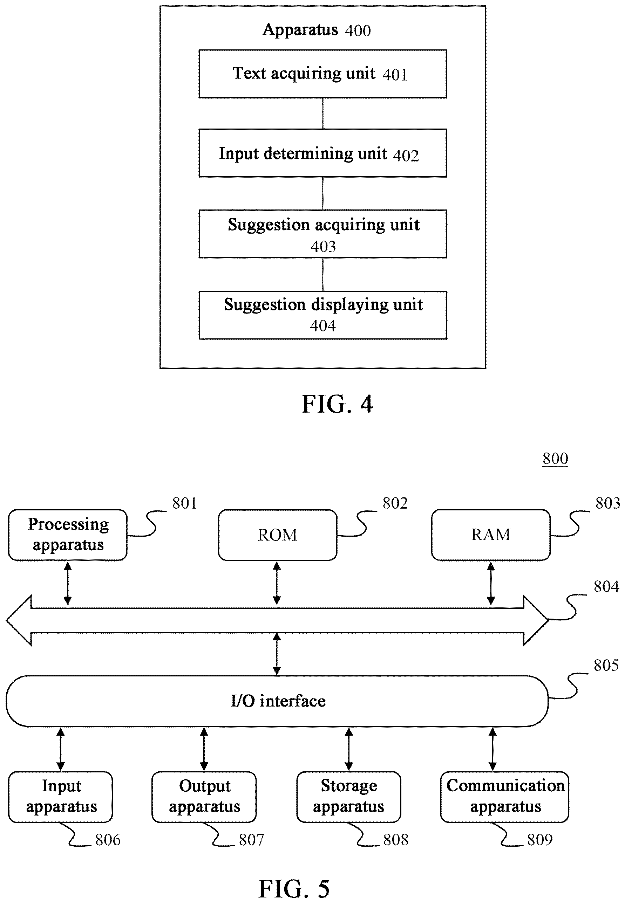

Referring to FIG. 4, an apparatus 400 for processing text is provided according to an embodiment of the present disclosure. The apparatus 400 includes: a text acquiring unit 401, an input determining unit 402, a suggestion acquiring unit 403 and a suggestion displaying unit 404.

The text acquiring unit 401 is configured to acquire a first text to be processed.

The input determining unit 402 is configured to determine, based on the first text and a preset instruction, a first input for a first target model, and the preset instruction is for instructing the first target model to provide a modification suggestion for the first text.

The suggestion acquiring unit 403 is configured to input the first input into the first target model to obtain the modification suggestion.

The suggestion displaying unit 404 is configured to display the modification suggestion in a first graphical user interface.

In some embodiments, the apparatus for processing text further includes: a highlighting unit, configured to highlight a first text content associated with the modification suggestion in the first text.

In some embodiments, the suggestion displaying unit is further configured to display the first graphical user interface in response to the first text content being triggered.

In some embodiments, the apparatus for processing text further includes: a second input determining unit and a second text obtaining unit.

The second input determining unit is configured to determine, based on the modification suggestion currently displayed in the first graphical user interface and a first text content associated with the modification suggestion, a second input for a second target model.

The second text obtaining unit is configured to input the second input into the second target model to obtain a second text content.

In some embodiments, the apparatus for processing text further includes: a suggestion updating unit, configured to update the modification suggestion displayed in the first graphical user interface in response to an input of a user.

In some embodiments, the apparatus for processing text further includes: a text replacing unit, configured to replace the first text content corresponding to the second text content with the second text content in the first text.

In some embodiments, the apparatus for processing text further includes: a text updating unit, configured to update the second text content in response to an edit operation of the user on the second text content.

For the embodiments of the apparatus, since they basically correspond to the embodiments of the method, reference can be made to the parts of the description of the embodiments of the method for the related parts. The above described apparatus embodiments are only illustrative, and the modules described as separate modules may be or may not be separated. Some or all of the modules may be selected according to actual needs to achieve the purpose of the solutions of the embodiments. Those ordinary skilled in the art can understand and implement without paying creative labor.

Correspondingly, according to one or more embodiments of the present disclosure, an electronic device is provided. The electronic device includes: at least one memory and at least one processor, where the memory is configured to store program code, and the processor is configured to invoke the program code stored in the memory, to cause the electronic device to perform the method for processing text provided according to one or more embodiments of the present disclosure.

Correspondingly, according to one or more embodiments of the present disclosure, a non-transitory computer storage medium is provided. The non-transitory computer storage medium stores program code, and the program code may be executed by a computer device to cause the computer device to perform the method for processing text provided according to one or more embodiments of the present disclosure.

Reference is made to FIG. 5 below, which illustrates a schematic structural diagram of an electronic device 800 (such as a terminal device or a server) suitable for implementing an embodiment of the present disclosure. The terminal device in the embodiment of the present disclosure may include, but is not limited to, a mobile terminal such as a mobile phone, a notebook computer, a digital broadcast receiver, a personal digital assistant (PDA), a tablet computer (PAD), a portable media player (PMP), a vehicle-mounted terminal (such as a vehicle-mounted navigation terminal); and a fixed terminal such as a digital TV, a desktop computer, and the like. The electronic device shown in FIG. 5 is only an example, and should not bring any limitation to the functions and the range of use of the embodiments of the present disclosure.

As shown in FIG. 5, the electronic device 800 may include a processing apparatus (such as a central processing unit, a graphics processing unit, etc.) 801, which may execute various appropriate actions and processing according to a program stored in a read-only memory (ROM) 802 or a program loaded from a storage apparatus 808 into a random access memory (RAM) 803. In the RAM 803, various programs and data required for the operation of the electronic device 800 are also stored. The processing apparatus 801, the ROM 802, and the RAM 803 are connected to each other through a bus 804. An input/output (I/O) interface 805 is also connected to the bus 804.

Usually, the following apparatuses may be connected to the I/O interface 805: an input apparatus 806 including, for example, a touchscreen, a touchpad, a keyboard, a mouse, a camera, a microphone, an accelerometer, a gyroscope, etc.; an output apparatus 807 including, for example, a liquid crystal display (LCD), a speaker, a vibrator, etc.; a storage apparatus 808 including, for example, a magnetic tape, a hard disk, etc.; and a communication apparatus 809. The communication apparatus 809 may allow the electronic device 800 to perform wireless or wired communication with other devices to exchange data. Although FIG. 5 shows the electronic device 800 having various apparatuses, it should be understood that it is not required to implement or have all of the illustrated apparatuses. More or fewer apparatuses may alternatively be implemented or provided.

In particular, according to embodiments of the present disclosure, the processes described above with reference to the flowcharts may be implemented as a computer software program. For example, an embodiment of the present disclosure includes a computer program product, which includes a computer program carried on a computer-readable medium, and the computer program includes program code for executing the method shown in the flowchart. In such an embodiment, the computer program may be downloaded and installed from the network through the communication apparatus 809, or installed from the storage apparatus 808, or installed from the ROM 802. When the computer program is executed by the processing apparatus 801, the above-mentioned functions defined in the method of the embodiment of the present disclosure are performed.

It should be noted that the above-mentioned computer-readable medium in the present disclosure may be a computer-readable signal medium or a computer-readable storage medium or any combination of the above two. The computer-readable storage medium may be, for example, but not limited to, an electrical, magnetic, optical, electromagnetic, infrared, or semiconductor system, apparatus, or device, or any combination of the above. More specific examples of the computer-readable storage medium may include, but are not limited to, an electrical connection with one or more wires, a portable computer disk, a hard disk, a random access memory (RAM), a read-only memory (ROM), an erasable programmable read-only memory (EPROM or flash memory), an optical fiber, a portable compact disk read-only memory (CD-ROM), an optical storage device, a magnetic storage device, or any suitable combination of the above. In the present disclosure, the computer-readable storage medium may be any tangible medium that contains or stores a program, and the program may be used by or in conjunction with an instruction execution system, apparatus, or device. In the present disclosure, the computer-readable signal medium may include a data signal propagated in a baseband or as a part of a carrier, in which a computer-readable program code is carried. This propagated data signal may take many forms, including but not limited to an electromagnetic signal, an optical signal, or any suitable combination of the above. The computer-readable signal medium may also be any computer-readable medium other than the computer-readable storage medium, and the computer-readable signal medium may send, propagate, or transmit a program for use by or in conjunction with an instruction execution system, apparatus, or device. The program code contained on the computer-readable medium may be transmitted by any suitable medium, including but not limited to: wire, optical cable, RF (radio frequency), etc., or any suitable combination of the above.

In some implementations, the client and the server can communicate using any currently known or future-developed network protocols, such as HTTP (HyperText Transfer Protocol), and can communicate (via a communication network) and interconnect with any form or medium of digital data. Examples of communication networks include a local area network ("LAN"), a wide area network ("WAN"), an internetwork (for example, the Internet), and a peer-to-peer network (for example, an ad hoc network), as well as any network currently known or developed in the future.

The above-mentioned computer-readable medium may be included in the above-mentioned electronic device; or it may exist alone without being assembled into the electronic device.

The above-mentioned computer-readable medium carries one or more programs, and when the one or more programs are executed by the electronic device, the electronic device is caused to perform the above-mentioned method of the present disclosure.

Computer program codes for performing the operations in the present disclosure may be written in one or more programming languages or a combination thereof, where the programming languages include an object-oriented programming language such as Java, Smalltalk, C++, and also include a conventional procedural programming language such as "C" language or similar programming language. The program code may be executed entirely on a user computer, partly on a user computer, as a stand-alone software package, partly on a user computer and partly on a remote computer, or entirely on a remote computer or a server. In the case of involving the remote computer, the remote computer may be connected to the user computer through any kind of network, including a local area network (LAN) or a wide area network (WAN), or may be connected to an external computer (for example, connected via the Internet using an Internet service provider).

The flowcharts and block diagrams in the drawings illustrate possible architectures, functions, and operations of the system, method, and computer program product according to various embodiments of the present disclosure. In this regard, each block in the flowcharts or block diagrams may represent a module, a program segment, or a part of code, and the module, the program segment, or the part of code contains one or more executable instructions for implementing the specified logical function. It should also be noted that, in some alternative implementations, the functions marked in the blocks may also occur in a different order from the order marked in the drawings. For example, two blocks shown one after another may actually be executed substantially in parallel, and sometimes they may be executed in the reverse order, depending on the functions involved. It should also be noted that each block in the block diagrams and/or flowcharts, and the combination of blocks in the block diagrams and/or flowcharts, may be implemented by a dedicated hardware-based system that executes the specified functions or operations, or may be implemented by a combination of dedicated hardware and computer instructions.

The units involved in the embodiments of the present disclosure may be implemented by software, and may also be implemented by hardware. Where a name of a unit does not constitute a limitation on the unit itself in some cases.

The functions described herein above may be performed, at least in part, by one or more hardware logic components. For example, without limitation, exemplary types of hardware logic components that may be used include: a field programmable gate array (FPGA), an application specific integrated circuit (ASIC), an application specific standard product (ASSP), a system on chip (SOC), a complex programmable logic device (CPLD), and the like.

In the context of the present disclosure, the machine-readable medium may be a tangible medium that may contain or store a program for use by or in conjunction with an instruction execution system, apparatus, or device. The machine-readable medium may be a machine-readable signal medium or a machine-readable storage medium. The machine-readable medium may include, but is not limited to, an electronic, magnetic, optical, electromagnetic, infrared, or semiconductor system, apparatus, or device, or any suitable combination of the above. More specific examples of the machine-readable storage medium may include an electrical connection based on one or more wires, a portable computer disk, a hard disk, a random access memory (RAM), a read-only memory (ROM), an erasable programmable read-only memory (EPROM or flash memory), an optical fiber, a portable compact disk read-only memory (CD-ROM), an optical storage device, a magnetic storage device, or any suitable combination of the above.

According to one or more embodiments of the present disclosure, a method for processing text is provided. The method includes: acquiring a first text to be processed; determining, based on the first text and a preset instruction, a first input for a first target model, the preset instruction being for instructing the first target model to provide a modification suggestion for the first text; inputting the first input into the first target model to obtain the modification suggestion; and displaying the modification suggestion in a first graphical user interface.

The method for processing text provided according to one or more embodiments of the present disclosure further includes: highlighting a first text content associated with the modification suggestion in the first text.

According to one or more embodiments of the present disclosure, the displaying the modification suggestion in the first graphical user interface includes: displaying the first graphical user interface in response to the first text content being triggered.

The method for processing text provided according to one or more embodiments of the present disclosure further includes: determining, based on the modification suggestion currently displayed in the first graphical user interface and a first text content associated with the modification suggestion, a second input for a second target model; and inputting the second input into the second target model to obtain a second text content.

The method for processing text provided according to one or more embodiments of the present disclosure, before determining, based on the modification suggestion currently displayed in the first graphical user interface and the first text content associated with the modification suggestion, the second input for the second target model, further includes: updating the modification suggestion displayed in the first graphical user interface in response to an input of a user.

The method for processing text provided according to one or more embodiments of the present disclosure, further includes: replacing the first text content corresponding to the second text content with the second text content in the first text.

The method for processing text provided according to one or more embodiments of the present disclosure, before replacing the first text content corresponding to the second text content with the second text content, further includes: updating the second text content in response to an edit operation of the user on the second text content.

According to one or more embodiments of the present disclosure, an apparatus for processing text is provided. The apparatus includes: a text acquiring unit, configured to acquire a first text to be processed; an input determining unit, configured to determine, based on the first text and a preset instruction, a first input for a first target model, the preset instruction being for instructing the first target model to provide a modification suggestion for the first text; a suggestion acquiring unit, configured to input the first input into the first target model to obtain the modification suggestion; and a suggestion displaying unit, configured to display the modification suggestion in a first graphical user interface.

According to one or more embodiments of the present disclosure, an electronic device is provided. The electronic device includes: at least one memory and at least one processor; where the memory is configured to store program code, and the processor is configured to invoke the program code stored in the memory, to cause the electronic device to perform the method for processing text provided according to one or more embodiments of the present disclosure.

According to one or more embodiments of the present disclosure, a non-transitory computer storage medium is provided. The non-transitory computer storage medium stores program code, and when the program code is executed by a computer device, the computer device is caused to perform the method for processing text provided according to one or more embodiments of the present disclosure.

The above description is only preferred embodiments of the present disclosure and an illustration of the applied technical principles. Those skilled in the art should understand that the scope of disclosure involved in the present disclosure is not limited to the technical solutions formed by the specific combination of the above technical features, but also encompasses other technical solutions formed by any combination of the above technical features or their equivalents without departing from the above disclosed concept, for example, a technical solution formed by replacing the above features with the technical features with similar functions disclosed in the present disclosure (but not limited to).

In addition, although operations are depicted in a specific order, this should not be understood as requiring these operations to be performed in the specific order shown or in a sequential order. Under certain circumstances, multitasking and parallel processing may be beneficial. Similarly, although several specific implementation details are included in the above discussion, these should not be construed as limiting the scope of the present disclosure. Certain features that are described in the context of separate embodiments may also be implemented in combination in a single embodiment. Conversely, various features described in the context of a single embodiment may also be implemented in multiple embodiments individually or in any suitable sub-combination.

Although the subject matter has been described in a language specific to structural features and/or logical actions of the method, it should be understood that the subject matter defined in the appended claims is not necessarily limited to the specific features or actions described above. On the contrary, the specific features and actions described above are only exemplary forms for implementing the claims.

## Claims

1. A method for processing text, comprising:
acquiring (S110) a first text to be processed;
determining (S120), based on the first text and a preset instruction, a first input for a first target model, the preset instruction being for instructing the first target model to provide a modification suggestion for the first text;
inputting (S130) the first input into the first target model to obtain the modification suggestion; and
displaying (S140) the modification suggestion in a first graphical user interface (11).

2. The method according to claim 1, further comprising: highlighting a first text content associated with the modification suggestion in the first text.

3. The method according to claim 2, wherein displaying (S140) the modification suggestion in the first graphical user interface (11) comprises:
displaying the first graphical user interface (11) in response to the first text content being triggered.

4. The method according to claim 1, further comprising:
determining, based on the modification suggestion currently displayed in the first graphical user interface (11) and a first text content associated with the modification suggestion, a second input for inputting into a second target model; and
inputting the second input into the second target model to obtain a second text content.

5. The method according to claim 4, before determining, based on the modification suggestion currently displayed in the first graphical user interface (11) and the first text content associated with the modification suggestion, the second input for inputting into the second target model, further comprising:
updating the modification suggestion displayed in the first graphical user interface (11) in response to an input of a user.

6. The method according to claim 4, further comprising:
replacing the first text content corresponding to the second text content with the second text content in the first text.

7. The method according to claim 6, before replacing the first text content corresponding to the second text content with the second text content, further comprising:
updating the second text content in response to an edit operation of the user on the second text content.

8. An apparatus (400) for processing text, comprising:
a text acquiring unit (401), configured to acquire a first text to be processed;
an input determining unit (402), configured to determine, based on the first text and a preset instruction, a first input for a first target model, the preset instruction being for instructing the first target model to provide a modification suggestion for the first text;
a suggestion acquiring unit (403), configured to input the first input into the first target model to obtain the modification suggestion; and
a suggestion displaying unit (404), configured to display the modification suggestion in a first graphical user interface (11).

9. An electronic device, comprising:
at least one memory and at least one processor,
wherein the memory is configured to store program code, and the processor is configured to invoke the program code stored in the memory, to cause the electronic device to perform the method according to any of claims 1 to 7.

10. A non-transitory computer storage medium, wherein
the non-transitory computer storage medium stores program code, and the program code, when executed by a computer device, causes the computer device to perform the method according to any of claims 1 to 7.
